# EUROPÄISCHE PATENTSCHRIFT

(11) **EP 0 451 131 B1**
(45) Veröffentlichungstag und Bekanntmachung des Hinweises auf die Patenterteilung: **08.12.1993**
(21) Anmeldenummer: 91890046.5
(22) Anmeldetag: 12.03.1991
(51) Int. Cl.: B23B 5/46, B23C 3/32

(54) **Verfahren zum Herstellen einer parallelachsigen Rotationskolbenmaschine**
Method of constructing a parallel axis rotary piston machine
Procédé de construction d'une machine à piston rotatif à axes parallèles

(30) Priorität: 29.03.1990 AT 728/90
(43) Veröffentlichungstag der Anmeldung: 09.10.1991
(73) Patentinhaber: WEINGARTNER MASCHINENBAU GESELLSCHAFT m.b.H., A-4656 Kirchham 26 (AT)
(72) Erfinder: Fuchs, Erwin, A-4813 Altmünster (AT)
(74) Vertreter: Hübscher, Heiner, Dipl.-Ing.

(56) Entgegenhaltungen:
- DE-A- 3 724 023
- FR-A- 2 021 530
- GB-A- 776 754

## Beschreibung

Die Erfindung bezieht sich auf ein Verfahren zum Herstellen einer parallelachsigen Rotationskolbenmaschine mit einem schraubenförmig verwundenen Außenteil und einem ebenfalls schraubenförmig verwundenen Innenteil, welche eine um 1 unterschiedliche Gangzahl aufweisenden Teile ineinandergreifen und relativ zueinander rotieren und exzentrisch umlaufen, wobei die Eingriffsfläche zumindest eines der Teile mit einem um eine zur Achse dieses Teiles parallele Drehachse drehenden messerbestückten Werkzeug spanabhebend bearbeitet wird, sowie auf eine Werkzeugmaschine zur Durchführung dieses Verfahrens.

Solche Sonderbauarten einer Rotationskolbenmaschine entstehen, wenn die Querschnitte der zusammenwirkenden, sich in der Gangzahl um die Zahl 1 unterscheidenden Außen- und Innenteile verschraubt werden, so daß die zwischen den beiden Teilen verbleibenden, für sich abgeschlossenen Kammern bei entsprechender Relativbewegung den Achsen der Teile entlangwandern. Diese Maschinen lassen sich sowohl als Pumpen, die sogenannten Mohno-Pumpen, zur Förderung insbesondere von zäheren Flüssigkeiten als auch umgekehrt mittels eines energieliefernden Flüssigkeisstromes als Motoren, beispielsweise für den Drehantrieb von Bohrköpfen u.dgl., einsetzen. Die Relativbewegungen von Innen- und Außenteilen können dabei auf drei verschiedene Arten erreicht werden, und zwar bei stehendem Außenteil durch einen rotierenden und exzentrisch um die Achse des Außenteils umlaufenden Innenteil, durch einen stehenden Innenteil und einen rotierenden und um die Achse des Innenteils exzentrisch umlaufenden Außenteil und durch gleichzeitig rotierende Innen- und Außenteile, deren Achsen um eine bestimmte Exzentrizität voneinander entfernt sind.

Bei der Herstellung dieser Rotationskolbenmaschinen macht vor allem die Bearbeitung des Außenteils mit seiner innenliegenden Eingriffsfläche beträchtliche Schwierigkeiten, da diese Eingriffsfläche für eine spanabhebende Bearbeitung mit üblichen Dreh- und Fräswerkzeugen nur schwer zugänglich ist. Meistens wird daher auch ein Kern vorgefertigt, der ein Gießen der Außenteile erlaubt, wobei allerdings ein elastisches Material, wie Gummi od.dgl., verwendet oder eine Teilung des Außenteils in Kauf genommen werden muß. Beim Einsatz von bekannten Zerspanungswerkzeugen (FR-A 2021530) für die Bearbeitung der Eingriffsfläche haben diese nicht nur die jeweiligen Querschnitte aus dem Rohling herauszuarbeiten, sondern die Querschnitte auch, der Verschraubung entsprechend, schrittweise beim Längsvorschub zu verdrehen, was nur sehr kleine Vorschübe ermöglicht und zu sehr hohen Fertigungszeiten führt. Außerdem kommt es zu geringen Schnittstabilitäten, da der Schaft der Werkzeuge wegen der geometrischen Zusammenhänge zwischen Querschnitt und Verwindung und des sich daraus ergebenden kleinen lichten Freiraumes nur sehr dünn bemessen sein kann und daher wenig biege- und torsionssteif ist. Ab einem bestimmten Durchmesserverhältnis zwischen herzustellendem Querschnitt und Werkzeug ist sogar auch theoretisch eine Bearbeitung der Außenteil-Eingriffsflächen nicht mehr möglich, da dazu dann der Werkzeugschaft kleiner als Null werden müßte. Bedingt durch die geringe Schnittstabilität ist auch die Herstellung längerer Teile praktisch ausgeschlossen und eine solche Herstellung verlangt ein axiales Zusammensetzen entsprechend kurzer Teile durch Kleben, Schrauben, Schweißen u. dgl. Darüber hinaus werden durch die schichtweise Bearbeitung des Hohlraumes stufenförmige Bearbeitungsspuren unvermeidlich, was eine weitere Begrenzung des Vorschubes bedeutet und die gewünschte Oberflächengüte beeinträchtigt.

Für die spanende Bearbeitung der außenliegenden Eingriffsfläche der Innenteile sind allerdings bereits verschiedene Maschinen bekannt, die beispielsweise zur Herstellung eingängiger Innenteile mit einem verschraubten kreisförmigen Querschnitt nach dem Wirbelverfahren arbeiten oder für ein- und mehrgängige Innenteile einen entlang der Steigung des gewünschten Profils geführten Profilfräser oder einen numerisch gesteuerten Standardfräser verwenden, doch sind diese Maschinen ausschließlich für die Bearbeitung außenliegender Oberflächen und nicht von Innenflächen einsetzbar.

Der Erfindung liegt daher die Aufgabe zugrunde, diese Mangel zu beseitigen und ein Verfahren der eingangs geschilderten Art anzugeben, das ein rationelles Herstellen der Eingriffsflächen von Innen- und Außenteilen bester Oberflächenqualität gewährleistet. Außerdem soll eine Werkzeugmaschine geschaffen werden, die sich bei verhältnismäßig geringem Bauaufwand gut zur Durchführung dieses Verfahrens eignet.

Die Erfindung löst die Aufgabe dadurch, daß der Innenteil mit einem Werkzeug bearbeitet wird, das hinsichtlich seines Eingriffsflächenprofiles dem Außenteil nachgebildet ist, daß der Außenteil mit einem Werkzeug bearbeitet wird, das hinsichtlich seines Eingriffsflächenprofiles dem Innenteil nachgebildet ist, wobei bei beiden Bearbeitungen das stirn- und mantelseitig messerbestückte Werkzeug und der zu bearbeitende Teil einem Relativvorschub unterworfen werden, der sich aus einer die Relativbewegung von Innen- und Außenteil nachvollziehenden Grundbewegung und einer die Schraubenverwindung der Teile nachvollziehenden schraubenförmigen Überlagerungsbewegung zusammensetzt. Da das Werkzeug bzw. dessen Schneidbereich der geometrischen Form des einen der beiden zusammenwirkenden Teile entspricht und sich Werkzeug und zu bearbeitender Teil genau so wie die zusammenwirkenden Teile relativ zueinander bewegen, wird durch das Werkzeug zwangsweise die exakte Gegenform herausgearbeitet, wenn dieser Relativbewegung eine der Schraubverwindung der Teile entsprechende schraubenförmige Bewegung überlagert wird. So können die Eingriffsflächen von Innen- genauso wie von Außenteilen gleichermaßen hergestellt werden und die gewünschte Eingriffsfläche entsteht mit optimaler Oberflächengüte. Dabei kann ein Werkzeug mit vergleichsweise großem Durchmesser Verwendung finden, was zu einer hohen Schnittstabilität führt und auch entsprechend große Vorschübe ermöglicht. Diese Schnittstabilität erlaubt es außerdem auch, längere Teile in einem Stück zu fertigen, so daß eine axiale Teilung unnötig ist. Da das Werkstück dem einen der beiden zusammenwirkenden Teile entspricht, gibt es auch keine Beschränkung der Bearbeitbarkeit aufgrund besonderer Durchmesserverhältnisse, und bei der Bearbeitung kommt es auch zu keinen Stufen in der Oberfläche sondern höchstens zu flachen schuppenartigen Schneidspuren pro Werkzeugumdrehung, wie sie bei allen zerspanenden Bearbeitungen auftreten.

Wird das Werkzeug um eine zur Achse des zu bearbeitenden Teiles exzentrische Achse drehend angetrieben und in Richtung dieser Achse gegen den ebenfalls um seine Achse drehend angetriebenen Teil vorwärtsbewegt, ergibt sich die erforderliche Vorschubbewegung ohne exzentrischen Umlauf der einen Achse relativ zur anderen, so daß sich diese Vorschubbewegung einfach verwirklichen läßt und die Exzentrizität der beiden Achsen leicht durch Querverschiebung auf unterschiedliche Werkstückformen eingestellt werden kann.

Nach einer vorteilhaften Ausgestaltung der Erfindung ist bei einer Werkzeugmaschine zur Herstellung von Innen- und Außenteilen einer Rotationskolbenmaschine, die eine Werkstückhalterung zum axialen Einspannen eines zu bearbeitenden Teiles und einen auf einem Werkzeugschlitten um eine zur Achse der Werkstückhalterung parallele Achse dreh- und antreibbar gelagerten Werkzeugkopf zur Aufnahme eines messerbestückten Werkzeuges aufweist, das Werkzeug in seiner Grundform jeweils einem Innen- oder Außenteil einer Rotationskolbenmaschine nachgebildet und stirn- und mantelseitig mit Messern bestückt, wobei die mantelseitigen Messer auf die Profilierung dieses Innen- oder Außenteils abgestimmte Schneiden aufweisen, und es lagern Werkstückhalterung und Werkzeugkopf relativ zueinander axialverschiebbar und exzentrisch umlaufend und drehend antreibbar. Eine solche Werkzeugmaschine erlaubt es, Werkzeug und zu bearbeitenden Teil wie zwei zusammenwirkende Teile einer Rotationskolbenmaschine relativ zueinander zu bewegen und gegeneinander zu verschrauben, so daß durch den Einsatz eines Werkzeuges, das dem Innen- oder Außenteil entspricht, die zugehörige Eingriffsfläche des Außen- oder Innenteiles hergestellt wird. Dazu muß der üblichen Relativbewegung der beiden Teile nur eine der Schraubverwindung der Teile entsprechende Vorwärtsbewegung mit gleichzeitiger Drehbewegung überlagert werden und das an der Stirnseite schneidenbestückte und mantelseitig mit seinen Schneiden an die geometrische Form des anderen Teils angepaßte Werkzeug arbeitet die gewünschte Eingriffsfläche exakt aus dem eingespannten Rohling heraus.

Besteht der Werkzeugschlitten aus einem Längs- und einem Querschlitten und sind Werkstückhalterung und Werkzeugkopf bei einstellbarem Achsabstand in einem bestimmten Drehzahlverhältnis antreibbar, lassen sich die erforderlichen Vorschubbewegungen aufwandsarm verwirklichen. Der Querschlitten des Werkzeugschlittens ermöglicht dabei eine Einstellung der Exzentrizität und der Längsschlitten führt zum Axialvorschub für die Schraubbewegung. Es genügen dann einfache Rotationsbewegungen von Werkzeugkopf und Werkstückhalterung um zum gewünschten Vorschub zu kommen, wobei für das notwendige Drehzahlverhältnis neben dem Gangzahlunterschied von Außen- und Innenteil auch die Drehbewegung für die Verschraubung bestimmend ist.

Besonders vorteilhaft ist es auch, wenn eine zu Werkstückhalterung und Werkzeugkopf achsparallele Synchronwelle vorgesehen ist, von der die Antriebe des Werkzeugkopfes und der Werkstückhalterung über ein Schieberad bzw. über ein Festrad ableitbar sind, so daß ein gemeinsamer Antrieb für Werkstück und Werkzeug möglich ist. Das Schieberad erlaubt dabei trotz der Antriebsverbindung die erforderliche Längsvorschubbewegung.

Günstig ist es weiters, wenn in die Synchronwelle ein in Abhängigkeit von der Schraubverwindung der zu bearbeitenden Teile und vom Längsvorschub des Werkzeuges ansteuerbares Überlagerungsgetriebe eingebunden ist, da durch dieses Überlagerungsgetriebe die Verschraubungsbewegung nach Maßgabe des tatsächlichen Längsvorschubes erreichbar ist. Das Überlagerungsgetriebe kann als übliches Ausgleichsgetriebe ausgebildet und mit einer von der Längsschlittenbewegung oder deren Antrieb abhängigen mechanischen oder elektronischen Betätigungseinrichtung zur Steuerung der Überlagerungsbewegung ausgerüstet sein.

Gemäß einer besonders vorteilhaften Konstruktion ragt bei der Bearbeitung der Eingriffsfläche eines Außenteiles in den Hohlraum des hohlzylindrischen Außenteilrohlings eine Dornstange vor, die in der Werkstückhalterung undrehbar, aber axial verschiebar gelagert ist und an ihrem in den Hohlraum vorragenden Ende ein exzentrisches Widerlager zur Abstützung des Werkzeuges aufweist. Durch diese Dornstange läßt sich das Werkzeug auch an seinem frei in den Außenteil eingreifenden Ende abstützen, was die Schnittstabilität wesentlich steigert und damit schnellere Vorschübe und die Herstellung längerer Werkstücke ermöglicht.

Ist dabei die Dornstange im Hohlraum des Außenteilrohlings zentriert geführt, wird die Dornstange im Werkstück selbst abgestützt und die Zerspanungskräfte können durch den entstehenden Kraftschluß zwischen Werkstück und Werkzeug besser abgeleitet werden.

Sitzt zur Führung auf der Dornstange eine mit einem Spreizkegel zusammenwirkende Spreizbuchse, die über einen Stelltrieb, vorzugsweise unter Zwischenlage einer Spreizfeder, schiebeverstellbar ist, kommt es zu einer zentrierenden Lagerung der Dornstange auch bei ungenaueren oder über die Länge variierenden Hohlraumdurchmessern und es wird stets ein spielfreier Sitz gewährleistet. Als Stelltrieb eignet sich eine Stellschraube od. dgl., die vorzugsweise eine Spreizfeder vorspannt, so daß über die Spreizfeder die Spreizbuchse nachgiebig auf den Spreizkegel aufgeschoben wird.

Günstig ist es auch, wenn die Dornstange einen Längskanal zur Luft- oder Flüssigkeitsbeaufschlagung des Hohlraumes aufweist, da so mit wenig Aufwand eine Werkzeug- und Werkstückkühlung und auch eine Entfernung der anfallenden Späne durch eine entsprechende Luft- oder Flüssigkeitszufuhr in den Hohlraum möglich sind.

In der Zeichnung ist der Erfindungsgegenstand rein schematisch veranschaulicht, und zwar zeigen Fig. 1 und 2 ein Ausführungsbeispiel eines Innen- und Außenteils einer erfindungsgemäßen Rotationskolbenmaschine in Stirnansicht und teilgeschnittem Schaubild, Fig. 3 eine erfindungsgemäße Werkzeugmaschine zur Herstellung eines Außenteils in teilgeschnittener Draufsicht, Fig. 4 und 5 Einzelheiten von Ausführungsvarianten dieser Werkzeugmaschine in teilgeschnittener Ansicht geänderten Maßstabes und Fig. 6 eine Werkzeugmaschine zur Bearbeitung eines Innenteils ebenfalls in teilgeschnittener Draufsicht.

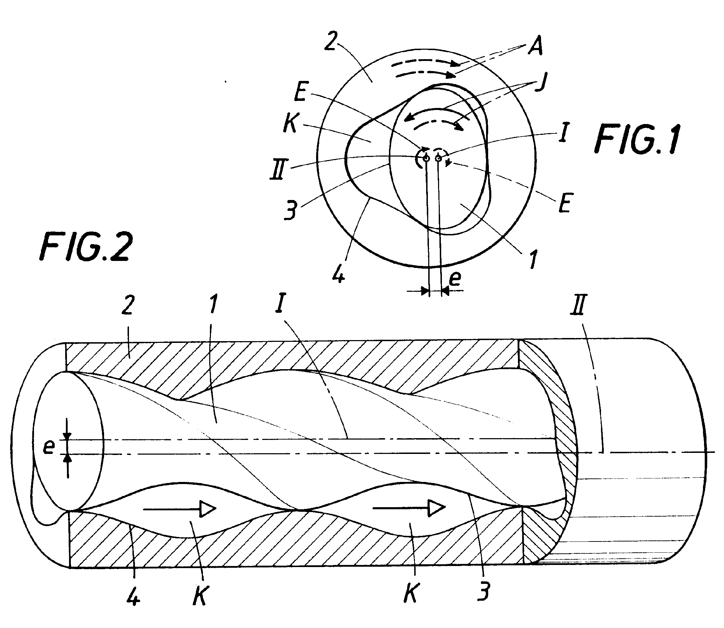

Die in Fig. 1 und 2 anhand einer Mohno-Pumpe veranschaulichte Rotationskolbenmaschine besteht im wesentlichen aus einem Innenteil 1 und einem Außenteil 2, welche ineinandergreifenden Teile parallele, um die Exzentrizität e gegeneinander versetzte Achsen I, II sowie eine um 1 unterschiedliche Gangzahl aufweisen. Im dargestellten Ausführungsbeispiel ist die Gangzahl des Außenteils 2 um 1 größer als die des Innenteils 1 und Innen- und Außenteil 1, 2 sind jeweils um ihre Achsen I, II schraubenförmig verwunden. Bei einer Relativbewegung zwischen Innen- und Außenteil 1, 2 kommt es dadurch zu einem axialen Wandern der von den Eingriffsflächen 3, 4 dieser Teile 1, 2 begrenzten Kammern K, so daß sich eine Pumpwirkung ergibt und sich vor allem zähere Flüssigkeiten gut fördern lassen. Durch eine Umkehrung, also durch ein Durchdrücken der Flüssigkeit durch die Kammern K läßt sich die Rotationskolbenmaschine als Motor für einen Drehantrieb verwenden.

Die erforderliche Relativbewegung zwischen Innen- und Außenteil 1, 2 kann aus zentrischen Rotationsbewegungen und exzentrischen Umlaufbewegungen der Teile 1, 2 zusammengesetzt werden, wobei es möglich ist, den Außenteil 2 festzuhalten und den Innenteil 1 rotieren und um die Achse II des Außenteils umlaufen zu lassen (Pfeile J, E), den Innenteil 1 festzuhalten und den Außenteil 2 rotieren und um die Achse I des Innenteils 1 umlaufen zu lassen (strichlierte Pfeile A, E) oder auch Innen- und Außenteile 1, 2 bei stehenden Achsen I, II der Exzentrizität e rotieren zu lassen (strichpunktierte Pfeile A, J).

Um nun die Eingriffsflächen 3, 4 von Innen- und Außenteil 1, 2 rationell spanabhebend bearbeiten zu können, wird ein Werkzeug verwendet, das für den jeweils zu bearbeitenden Teil den zugehörenden anderen Teil darstellt, so daß bei einer der Relativbewegung der beiden Teile entsprechenden Vorschubbewegung, welche Vorschubbewegung zusätzlich eine der Schraubverwindung der Teile entsprechende schraubenförmige Überlagerungsbewegung umfaßt, das Werkzeug exakt die gewünschte Eingriffsfläche aus dem Werkstück herausarbeitet.

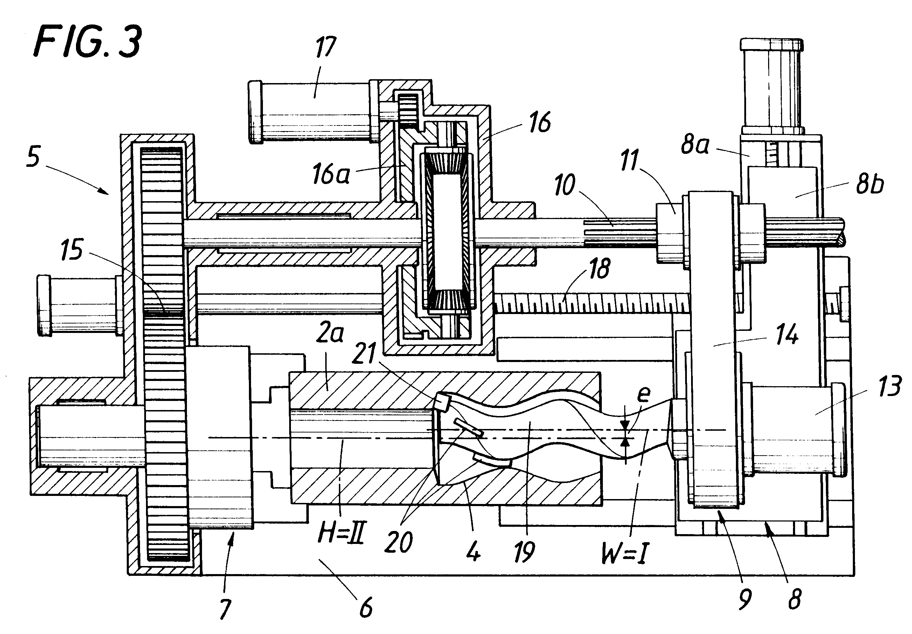

Eine dazu geeignete Werkzeugmaschine 5 ist in Fig. 3 veranschaulicht. Auf einem nur angedeuteten Maschinenbett 6 ist eine Werkstückhalterung 7 zum axialen Einspannen eines zu bearbeiteten Teiles aufgebaut und ein Werkzeugschlitten 8 mit einem Werkzeugkopf 9 zur Aufnahme eines geeigneten Werkzeuges geführt. Der Werkzeugschlitten 8 setzt sich aus einem Längsschlitten 8a und einem Querschlitten 8b zusammen und der Werkzeugkopf 9 ist wie die Werkstückhalterung 7 dreh- und antreibbar gelagert, wobei die Drehachsen H, W von Werkstückhalterung 7 und Werkzeugkopf 9 parallel zueinander verlaufen und je nach Stellung des Querschlittens 8b eine bestimmte Exzentrizität e voneinander einnehmen. Zum gemeinsamen Antrieb von Werkzeugkopf 9 und Werkstückhalterung 7 ist eine parallelachsige Synchronwelle 10 vorgesehen, wobei zur Antriebsverbindung zwischen Synchronwelle 10 und Werkzeugkopf 9 ein Schieberad 11 und zur Antriebsverbindung von Synchronwelle 10 und Werkstückhalterung 7 ein Festrad 12 dienen. Über einen beispielsweise mit dem Werkzeugkopf 9 verbundenen Antriebsmotor 13 läßt sich so nicht nur das Werkzeug selbst, sondern auch die Werkzeughalterung antreiben, wobei Zwischengetriebe 14, 15 für das gewünschte Drehzahlverhältnis sorgen. Um diesem bestehenden Drehzahlverhältnis eine zusätzliche Drehbewegung überlagern und dadurch zusammen mit einem Längsvorschub für die Herstellung einer Schraubverwindung sorgen zu können, ist in die Synchronwelle 10 ein Überlagerungsgetriebe 16 eingebunden, so daß durch einen entsprechenden Antrieb des Tellerrades 16a die gewünschte Bewegungsüberlagerung erfolgt. Wird der Antrieb 17 des Tellerrades 16a in Abhängigkeit vom Längsvorschub des Werkzeugschlittens 8 bzw. vom Spindelantrieb 18 für diesen Schlitten angesteuert, läßt sich zusätzlich zu den Relativbewegungen von Werkzeug und Werkstück die für die Schraubverwindung erforderliche Vorschubbewegung erreichen.

Beim Ausführungsbeispiel nach Fig. 3 wird die Eingriffsfläche 4 eines Außenteils bearbeitet, so daß ein Werkzeug 19 im Werkzeugkopf 9 eingespannt ist, das grundsätzlich der Form eines Innenteils entspricht und mit seinen mantelseitigen Messern 20 auf die genaue Profilierung der Eingriffsfläche 3 des Innenteils abgestimmt ist. Stirnseitige Messer 21 des Werkzeuges 19 erlauben das Einarbeiten des Werkzeuges in einen hohlzylindrischen Rohling 2a. Als Vorschub ist eine Bewegung einzuhalten, die der Relativbewegung zwischen Innen- und Außenteil als Grundbewegung und einer schraubenförmigen Zusatzbewegung für die schraubenförmige Verwindung entspricht.

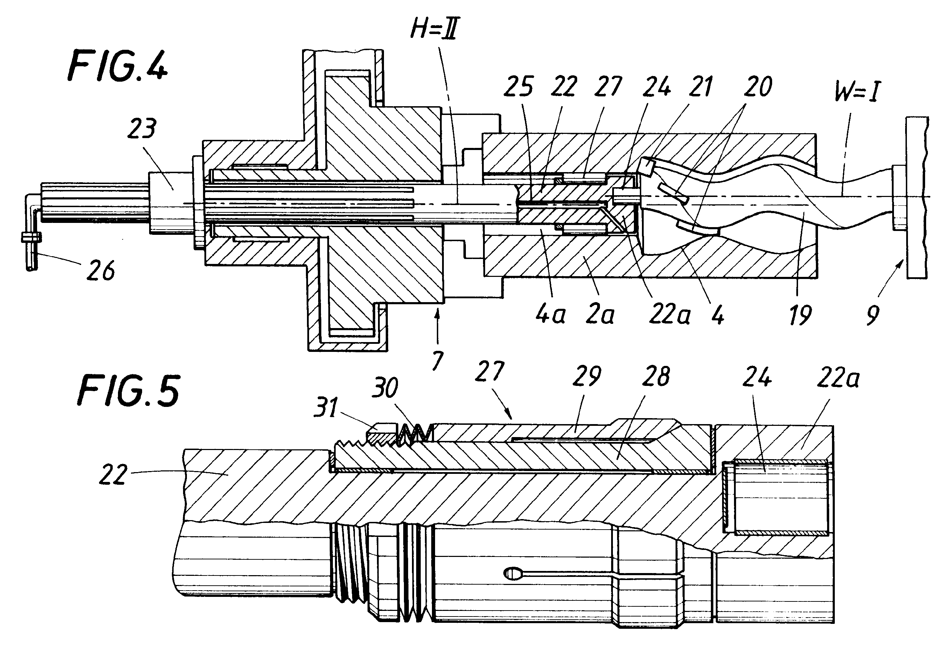

Wie in Fig. 4 veranschaulicht, kann zur Erhöhung der Schnittstabilität in den Hohlraum 4a des Außenteilrohlings 2a eine Dornstange 22 eingeführt sein, die über eine Drehsicherung 23 drehfest, aber axialverschiebbar in der Werkstückhalterung 7 abgestützt ist und an ihrem in den Hohlraum 4a vorragenden Ende 22a ein Widerlager 24 zur Abstützung des Werkzeuges 19 bildet. Die Dornstange 22 ist im Außenteilrohling 2a zentriert geführt und das Widerlager 24 zur Achse H der Werkstückhalterung 7, entsprechend der Exzentrizität e der Achsen H, W von Werkstückhalterung 7 und Werkzeugkopf 9, exzentrisch, so daß trotz der Abstützung Werkstück und Werkzeug die erforderlichen Rotationsbewegungen ausführen können.

Weist die Dornstange 22 einen Längskanal 25 auf, läßt sich über einen entsprechenden Außenanschluß 26 Luft oder Flüssigkeit in den Bearbeitungsbereich einbringen, so daß nicht nur das Werkzeug bzw. das Werkstück gekühlt wird, sondern auch die anfallenden Späne ausgetragen werden können.

Um einen günstigeren Kraftfluß bei der Abstützung des Werkzeuges 19 zu erreichen, wird die Dornstange 22 innerhalb des Außenteilrohlings 2a über eine Führung 27 abgestützt. Diese Führung 27 kann, wie in Fig. 5 angedeutet, aus einem auf der Dornstange 22 aufgezogenen Spreizkegel 28 bestehen, auf dem schiebeverstellbar eine Spreizbuchse 29 sitzt. Die Spreizbuchse 29 wird über eine Spreizfeder 30 und eine Stellmutter 31 zum Vorspannen der Feder gegen den Spreizkegel hin vorgedrückt, so daß sich auf einfache Weise eine zentrierende Führung der Dornstange 22 ergibt und sich die Führung auch an Ungleichmäßikeiten des Hohlraumes 4a anpassen kann.

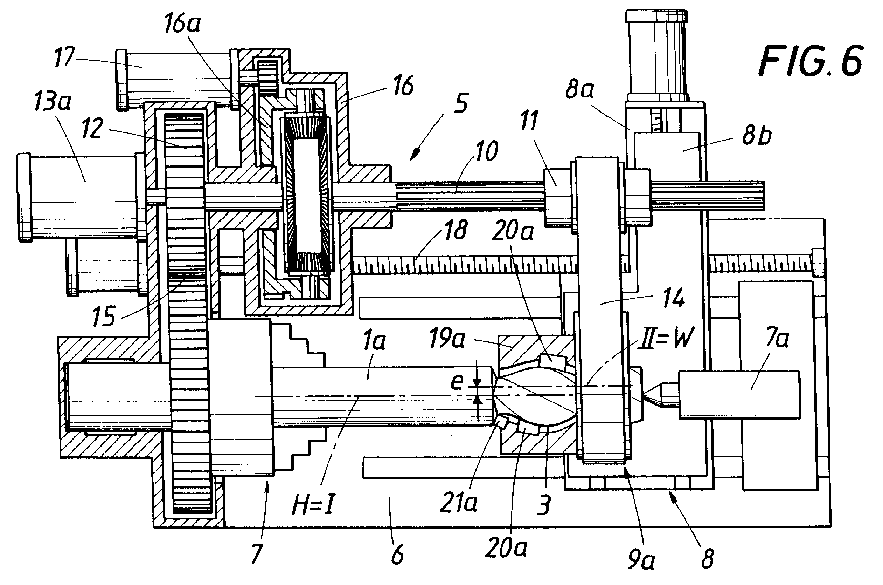

Ähnlich wie die Eingriffsfläche 4 eines Außenteils 2 läßt sich auch die Eingriffsfläche 3 eines Innenteils 1 bearbeiten, was an Hand des Ausführungsbeispiels nach Fig. 6 veranschaulicht ist. Bei im wesentlichen gleichbleibender Werkzeugmaschine 5 wird lediglich die Werkstückhalterung 7 an die Aufnahme eines spindelförmigen Rohlings 1a angepaßt und das Werkzeug 19a entspricht grundsätzlich einem dem zu bearbeitenden Innenteil zugehörenden Außenteil, wobei die mantelseitigen Messer 20a auf die genaue Profilierung der Eingriffsfläche 4 des Außenteils abgestimmt sind. Die stirnseitigen Messer 21a erlauben das axiale Einarbeiten des Werkzeuges 19a in den spindelförmigen Rohling 1a und sorgen für den Übergang zwischen Mantelfläche und Stirnfläche des Innenteils. Auch hier ist einfach für die notwendige Vorschubbewegung zu sorgen, die der Relativbewegung zwischen Innen- und Außenteil und einer überlagerten Schraubenbewegung entspricht, und es kommt zur exakten Bearbeitung des Innenteils 1. Da hier die Werkstückhalterung 7 einen Reitstock 7a umfaßt, wird zweckmäßigerweise nicht der Werkzeugkopf 9a direkt, sondern die Synchronwelle 10 über einen an dieser angesetzten Motor 13a angetrieben.

Die Erfindung ist selbstverständlich nicht auf die dargestellten Ausführungsformen beschränkt und das erfindungsgemäße Verfahren könnte auch auf anderen geeigneten Maschinen, bespielsweise auf einer Maschine mit stehend gespanntem Werkstück und drehendem und exzentrisch umlaufendem Werkzeug, durchgeführt werden.

## Patentansprüche

1. Verfahren zum Herstellen einer parallelachsigen Rotationskolbenmaschine mit einem schraubenförmig verwundenen Außenteil (2) und einem ebenfalls schraubenförmig verwundenen Innenteil (1), welche eine um 1 unterschiedliche Gangzahl aufweisenden Teile (1, 2) ineinandergreifen und relativ zueinander rotieren und exzentrisch umlaufen, wobei die Eingriffsfläche (3, 4) zumindest eines der Teile mit einem um eine zur Achse (H) dieses Teiles parallele Drehachse (W) drehenden messerbestückten Werkzeug (19, 19a) spanabhebend bearbeitet wird, dadurch gekennzeichnet, daß der Innenteil (1) mit einem Werkzeug (19a) bearbeitet wird, das hinsichtlich seines Eingriffsflächenprofiles dem Außenteil (2) nachgebildet ist, daß der Außenteil (2) mit einem Werkzeug (19) bearbeitet wird, das hinsichtlich seines Eingriffsflächenprofiles dem Innenteil (1) nachgebildet ist, wobei bei beiden Bearbeitungen das stirn- und mantelseitig messerbestückte Werkzeug (19, 19a) und der zu bearbeitende Teil einem Relativvorschub unterworfen werden, der sich aus einer die Relativbewegung von Innen- und Außenteil (1, 2) nachvollziehenden Grundbewegung und einer die Schraubenverwindung der Teile nachvollziehenden schraubenförmigen Uberlagerungsbewegung zusammensetzt.

2. Verfahren nach Anspruch 1, dadurch gekennzeichnet, daß das Werkzeug (19, 19a) um eine zur Achse (H) des zu bearbeitenden Teiles exzentrische Achse (W) drehend angetrieben und in Richtung dieser Drehachse gegen den ebenfalls um seine Achse (H) drehend angetriebenen Teil vorwärtsbewegt wird.

3. Werkzeugmaschine zur Durchführung des Verfahrens nach Anspruch 1 oder 2, mit einer Werkstückhalterung zum axialen Einspannen eines zu bearbeitenden Teiles und einem auf einem Werkzeugschlitten um eine zur Achse der Werkstückhalterung parallele Achse dreh- und antreibbar gelagerten Werkzeugkopf zur Aufnahme eines messerbestückten Werkzeuges, dadurch gekennzeichnet, daß das Werkzeug (19; 19a) in seiner Grundform jeweils einem Innen- oder Außenteil einer Rotationskolbenmaschine nachgebildet und stirn- und mantelseitig mit Messern (20, 21; 20a, 21a) bestückt ist, wobei die mantelseitigen Messer (20, 20a) auf die Profilierung dieses Innen- oder Außenteils (1, 2) abgestimmte Schneiden aufweisen, und daß Werkstückhalterung (7) und Werkzeugkopf (9; 9a) relativ zueinander axial verschiebbar und exzentrisch umlaufend und drehend antreibbar lagern.

4. Werkzeugmaschine nach Anspruch 3, dadurch gekennzeichnet, daß der Werzeugschlitten (8) aus einem Längs- (8a) und einem Querschlitten (8b) besteht und Werkstückhalterung (7) und Werkzeugkopf (9, 9a) bei einstellbarem Achsabstand (e) in einem bestimmten Drehzahlverhältnis antreibbar sind.

5. Werkzeugmaschine nach Anspruch 4, dadurch gekennzeichnet, daß eine zu Werkstückhalterung (7) und Werkzeugkopf (9, 9a) achsparallele Synchronwelle (10) vorgesehen ist, von der die Antriebe des Werkzeugkopfes (9, 9a) und der Werkstückhalterung (7) über ein Schieberad (11) bzw. über ein Festrad (12) ableitbar sind.

6. Werkzeugmaschine nach Anspruch 5, dadurch gekennzeichnet, daß In die Synchronwelle (10) ein in Abhängigkeit von der Schraubverwindung der zu bearbeitenden Teile und vom Längsvorschub des Werkzeuges ansteuerbares Überlagerungsgetriebe (16) eingebunden ist.

7. Werzeugmaschine nach einem der Anspruche 3 - 6, dadurch gekennzeichnet, daß bei der Bearbeitung der Eingriffsfläche (4) eines Außenteiles (2) in den Hohlraum (4a) des hohlzylindrischen Außenteilrohlings (2a) eine Dornstange (22) vorragt, die in der Werkstückhalterung (7) undrehbar, aber axial verschiebbar gelagert ist und an ihrem in den Hohlraum (4a) vorragenden Ende (22a) ein exzentrisches Widerlager (24) zur Abstützung des Werkzeuges (19) aufweist.

8. Werkzeugmaschine nach Anspruch 7, dadurch gekennzeichnet, daß die Dornstange (22) im Hohlraum (4a) des Außenteilrohlings (2a) zentriert geführt ist.

9. Werkzeugmaschine nach Anspruch 8, dadurch gekennzeichent, daß zur Führung auf der Dornstange (22) eine mit einem Spreizkegel (28) zusammenwirkende Spreizbuchse (29) sitzt, die über einen Stelltrieb (31), vorzugsweise unter Zwischenlage einer Spreizfeder (30), schiebeverstellbar ist.

10. Werkzeugmaschine nach einem der Anspruche 7 - 9, dadurch gekennzeichnet, daß die Dornstange (22) einen Längskanal (25) zur Luft- oder Flüssigkeitsbeaufschlagung des Hohlraumes (4a) aufweist.

## Claims

1. A method of manufacturing a parallel-axis rotary piston engine comprising a helical outer part (2) and a helical inner part (1), the said part (1, 2), the number of turns of which differ by 1, inter-engaging and rotating relatively to one another and revolving eccentrically, the engagement surface (3, 4) of at least one of the parts being machined by means of a tool (19, 19a) which is equipped with cutters and which rotates about an axis of rotation (W) parallel to the axis (H) of said part, characterised in that the inner part (1) is machined with a tool (19a) which, in respect of its engagement surface profile, is a copy of the outer part (2), in that the outer part (2) is machined with a tool (19) which, in respect of its engagement surface profile, is a copy of the inner part (1), the tool (19, 19a) equipped with cutters on the end and the generated surfaces, and the part for machining, being subjected to a relative feed during both machining operations, such feed being made of a basic movement which reconstructs the relative movement of the inner and outer parts (1, 2) and a helical superimposed movement which reconstructs the helical twist of the parts.

2. A method according to claim 1, characterised in that the tool (19, 19a) is driven in rotation about an axis (W) which is eccentric in relation to the axis (H) of the part for machining and is moved forward in the direction of said axis of rotation against the part which is also driven in rotation about its axis (H).

3. A machine tool for performing the method according to claim 1 or 2, comprising a workpiece mounting for axially holding a part for machining and a tool head mounted on a tool carrier to be drivable and rotatable about an axis parallel to the axis of the workpiece mounting, said tool head being adapted to receive a cutter-equipped tool, characterised in that the basic shape of the tool (19; 19a) is in each case a copy of of an inner or outer part of a rotary piston engine and is equipped at the end and the generated surfaces with cutters (20, 21; 20a, 21a), the cutters (20, 20a) on the generated surface having cutting edges adapted to the profiling of said inner or outer part (1, 2) and the workpiece mounting (7) and the tool head (9; 9a) being mounted for relative axial displacement and eccentric revolution and rotating drive.

4. A machine tool according to claim 3, characterised in that the tool carrier (8) consists of a longitudinal carrier (8a) and a transverse carrier (8b) and the workpiece mounting (7) and tool head (9, 9a) are adapted to be driven in a given speed ratio with an adjustable distance (e) between the axes.

5. A machine tool according to claim 4, characterised in that a synchronous shaft (10), the axis of which is parallel to the axis of the workpiece mounting (7) and the tool head (9, 9a), is provided, from which synchronous shaft (10) the drives for the tool head (9, 9a) and the workpiece mounting (7) are adapted to be derived via a sliding wheel (11) and a fixed wheel (12) respectively.

6. A machine tool according to claim 5, characterised in that a superimposition gear (16) controllable in dependence on the helical twist of the parts for machining and on the longitudinal feed of the tool is incorporated in the synchronous shaft (10).

7. A machine tool according to any one of claims 3 to 6, characterised in that a mandrel (22) projects into the cavity (4a) of the hollow-cylindrical outer part blank (2a) for the machining of the engagement surface (4) of an outer part (2), said mandrel being mounted in the workpiece mounting (7) so as to be non-rotatable but axially displaceable and having at its end (22a) projecting into the cavity (4a) an eccentric abutment (24) to support the tool (19).

8. A machine tool according to claim 7, characterised in that the mandrel (22) is guided so as to be centred in the cavity (4a) of the outer part blank (2a).

9. A machine tool according to claim 8, characterised in that an expanding bush (29) cooperating with an expanding cone (28) is provided on the mandrel (22) for guide purposes and is slidably adjustable by way of an adjusting drive (31) preferably with the interposition of an expanding spring (30).

10. A machine tool according to any one of claims 7 to 9, characterised in that the mandrel (22) has a longitudinal duct (25) for the admission of air or fluid to the cavity (4a).

## Revendications

1. Procédé de fabrication d'une machine à piston rotatif à axe parallèle, avec une partie extérieure (2) à configuration hélicoïdale et une partie intérieure (1) également à configuration hélicoïdale, ces parties (1, 2), présentant un nombre de filets différent de un, venant en contact l'une avec l'autre et tournant l'une par rapport à l'autre de façon excentrée, la surface de contact (3, 4) d'au moins l'une des parties étant usinée avec enlèvement de matière, à l'aide d'un outil (19, 19a) muni de lames et tournant par rapport à l'axe (H) de cette partie,
caractérisé en ce que la partie intérieure (1) est usinée avec un outil (19a) dont le profil des surfaces actives reproduit celui de la partie extérieure (2), en ce que la partie extérieure (2) est usinée avec un outil (19) dont le profil des surfaces actives reproduit celui de la partie intérieure (1), l'outil (19, 19a) équipé de lames placée du côté frontal et du côté de l'enveloppe, et la partie à usiner étant soumis, dans le cas des deux usinages, à une avance relative composée d'un mouvement de base, décrivant le mouvement relatif entre partie intérieure et partie extérieure (1, 2), et un mouvement superposé, hélicoïdal, décrivant l'enroulement hélicoïdal des parties..

2. Procédé selon la revendication 1,
caractérisé en ce que l'outil (19, 19a) est entraîné en rotation autour d'un axe (W) excentrique par rapport à l'axe (H) de la partie à usiner et soumis à un mouvement d'avance dans la direction de cet axe de rotation, vers la partie également entraînée en rotation autour de son axe (H).

3. Machine-outil pour mettre en oeuvre le procédé selon la revendication 1 ou 2, avec une fixation de pièce à usiner, destinée à enserrer axialement une partie à usiner et une tête d'outil, tourillonnant sur un chariot à outil à usiner, de façon à pouvoir tourner et être entraînée, par rapport à un axe parallèle à l'axe de la fixation de pièce à usiner, en vue de supporter un outil équipé de lames,
caractérisée en ce que la forme de base de l'outil (19; 19a) reproduit chaque fois celle d'un partie intérieure ou d'une partie extérieure d'une machine à piston rotatif, et est équipée, côté frontal et côté enveloppe de lames (20, 21; 20a, 21a), les lames côté enveloppe (20, 20a) présentant des tranchants conçus pour le profil de cette partie intérieure ou extérieure (1, 2) et en ce que la fixation de pièce à usiner (7) et la tête d'outil (9; 9a) étant déplaçables axialement et tournant de façon excentrée, l'une par rapport à l'autre, et montées de façon à pouvoir être entraînées en rotation.

4. Machine-outil selon la revendication 3,
caractérisée en ce que le chariot à outil (8) est composé d'un chariot longitudinal (8a) et d'un chariot transversal (8b) et la fixation de pièce à usiner (7) et la tête d'outil (9, 9a) étant susceptibles d'être entraînées selon un rapport déterminé entre les rotations, avec un entraxe (e) réglable.

5. Machine-outil selon la revendication 4,
caractérisée en ce qu'est prévu un arbre de synchronisation (10), parallèle à l'axe de la fixation de pièce à usiner (7) et à celui de la tête d'outil (9, 9a), arbre dont on peut dériver les entraînements de la tête d'outil (9, 9a) et de la fixation de pièce à usiner (7), par l'intermédiaire d'une roue de crabotage coulissant (11) ou d'une roue fixe (12).

6. Machine-outil selon la revendication 5,
caractérisée en ce qu'une transmission de superposition (16), pouvant être commandée en fonction des caractéristiques de l'hélicoïde des parties à usiner et de l'avance longitudinale de l'outil, est intégrée et reliée à l'arbre de synchronisation (10).

7. Machine-outil selon l'une des revendications 3 à 6,
caractérisée en ce que, pendant l'usinage de la surface de contact (4) d'une partie extérieure (2), pénètre dans l'espace creux (4a) de l'ébauche de partie extérieure (2a) cylindrique creuse une tige de mandrin (22), bloquée en rotation dans la fixation de pièce à usiner (7) mais pouvant être déplacée axialement et présentant à son extrémité (22a) pénétrant dans l'espace creux (4a) un contre appui (24) excentrique, destiné à soutenir l'outil (19).

8. Machine-outil selon la revendication 7,
caractérisée en ce que la tige de mandrin (22) est guidée centrée dans l'espace creux (4a) de l'ébauche de partie extérieure (2a).

9. Machine-outil selon la revendication 8,
caractérisée en ce qu'une douille d'écartement (29), coopérant avec un cône d'écartement (28), susceptible de pouvoir être réglée par coulissement par l'intermédiaire d'un mécanisme de réglage (31), de préférence avec interposition d'un ressort d'écartement (30), est montée en vue d'assurer le guidage sur la tige de mandrin (22).

10. Machine-outil selon l'une des revendications 7 à 9,
caractérisée en ce que la tige de mandrin (22) présente un canal longitudinal (25) permettant d'exposer l'espace creux (4a) à de l'air où à un liquide.
